# EUROPÄISCHE PATENTSCHRIFT

(11) **EP 3 210 461 B1**
(45) Veröffentlichungstag und Bekanntmachung des Hinweises auf die Patenterteilung: **12.02.2020**
(21) Anmeldenummer: 16202645.4
(22) Anmeldetag: 07.12.2016
(51) Int. Cl.: A01F 12/44

(54) **VERFAHREN ZUM BETREIBEN EINER REINIGUNGSEINRICHTUNG FÜR EINEN MÄHDRESCHER**
METHOD FOR OPERATING A CLEANING DEVICE OF A COMBINE HARVESTER
PROCÉDÉ DE FONCTIONNEMENT D'UN DISPOSITIF DE NETTOYAGE POUR MOISSONNEUSE-BATTEUSE

(30) Priorität: 24.02.2016 DE 102016103234
(43) Veröffentlichungstag der Anmeldung: 30.08.2017
(73) Patentinhaber: CLAAS Selbstfahrende Erntemaschinen GmbH, 33428 Harsewinkel (DE)
(72) Erfinder: Pölling, Benedikt, 48653 Coesfeld (DE)
(74) Vertreter: CLAAS Gruppe

(56) Entgegenhaltungen:
- EP-A1- 0 701 772
- EP-A1- 2 476 304
- EP-A1- 2 708 111
- EP-A2- 0 475 453
- WO-A1-2012/097933

## Beschreibung

Die vorliegende Erfindung betrifft ein Verfahren zum Betreiben einer Reinigungseinrichtung für einen Mähdrescher gemäß dem Oberbegriff des Anspruches 1 sowie einen Mähdrescher mit einer Reinigungsvorrichtung gemäß dem Oberbegriff des Anspruches 7.

Aus der EP 2 708 111 A1 sind ein Verfahren zum Betreiben einer Reinigungseinrichtung für einen Mähdrescher sowie eine Reinigungseinrichtung für einen Mähdrescher der eingangs genannten Art bekannt. Die Reinigungseinrichtung umfasst eine in bekannter Weise oszillierend angetriebene Siebanordnung, welche in verschiedenen Ebenen eines Siebrahmens angeordnete Siebe aufweist, sowie in dem Siebrahmen angeordnete Luftdüsen, welche unter einem Winkel zu der Oberfläche der Siebe geneigt angeordnet sind, um diese von unten her zu durchströmen. Die Luftdüsen werden von einer Druckluftquelle mit Druckluft beaufschlagt. Die durch die Siebfläche hindurchströmende Druckluft dient dazu, ein Gemisch aus Körnern und Nichtkornbestandteilen, welches der Reinigungseinrichtung von vorgelagerten Dresch- und Abscheidesystemen zugeführt wird, aufzulockern. Die Durchströmung der Siebe zusammen mit der oszillierenden Bewegung der Siebanordnung führen zu einer Trennung der schwereren Kornbestandteile von den leichteren Nichtkornbestandteilen, wobei erstere durch die Öffnungen in den Sieben nach unten hindurchtreten, während letztere von der Luftströmung über die Sieboberflächen hinweg abtransportiert werden.

Aufgabe der vorliegenden Erfindung ist es, ein Verfahren zum Betreiben einer Reinigungseinrichtung für einen Mähdrescher sowie einen Mähdrescher bereitzustellen, mit welchen sich unter Beibehaltung des für das Reinigungseinrichtung vorgesehenen Bauraumes eine höhere Leistungsdichte erreichen lässt.

Diese Aufgabe wird erfindungsgemäß durch ein Verfahren gemäß dem Anspruch 1 sowie durch einen Mähdrescher gemäß dem nebengeordneten Anspruch 7 erreicht.

Gemäß dem Anspruch 1 wird ein Verfahren zum Betreiben einer Reinigungseinrichtung für einen Mähdrescher vorgeschlagen, wobei die Reinigungseinrichtung zumindest eine Druckluftquelle, durch welche wenigstens ein Luftstrom bereitgestellt wird, sowie eine oszillierend angetriebene Siebanordnung, welche zumindest zwei in verschiedenen Ebenen angeordnete Siebe aufweist, die eine vorwärts und eine rückwärts gerichtete Hubbewegung ausführen und die von ihrer Unterseite her von dem wenigstens einen Luftstrom durchströmt werden, umfasst, wobei das Verfahren dadurch gekennzeichnet ist, dass wenigstens ein die Siebanordnung durchströmender Luftstrom während der rückwärts gerichteten Hubbewegung der Siebanordnung unterbrochen wird. Durch das Verfahren wird erreicht, dass eine Abscheidung der Körner nicht nur während des Vorwärtshubes der Siebanordnung, das heißt während der Annäherung an die Körner stattfindet, sondern zusätzlich auch während des Rückwärtshubes der Siebanordnung, das heißt während sich die Siebanordnung von den Körnern entfernt. Hierbei kommt der Umstand zum Tragen, dass während des Rückhubes, während dessen sich der Abstand zwischen der Siebanordnung und den Körnern vergrößert, der wenigstens eine Luftstrom unterbrochen wird, so dass Körner trotz des größeren Abstands allein aufgrund ihrer Gewichtskraft durch die Öffnungen der zumindest ein Obersieb und ein Untersieb umfassenden Siebanordnung hindurchtreten können. Durch die temporäre Unterbrechung des wenigstens einen Luftstromes müssen die Körner lediglich den größeren Abstand während des Rückhubes überwinden, nicht aber zusätzlich die ihrer Bewegung entgegen gerichteten Kräfte, die aus dem wenigstens einen Luftstrom resultieren, der gemäß dem Stand der Technik auch während des Rückhubes der Siebanordnung bereitgestellt wird. Durch diese Maßnahme lässt sich unter Beibehaltung des Bauraums für die Reinigungseinrichtung eine höhere Leistungsdichte erreichen. Darüber hinaus wirkt sich das Verfahren positiv auf die Kornsauberkeit aus.

Hierzu sollte die Zuführung des wenigstens einen Luftstromes für die Gesamtdauer der rückwärts gerichteten Hubbewegung der Siebanordnung unterbrochen werden. Hierdurch kann erreicht werden, dass die Körner, trotz zunehmender Beabstandung der Sieboberflächen von dem Gutstrom, allein aufgrund ihrer Gewichtskraft durch die Siebe während der gesamten Rückhubphase abgeschieden werden.

Vorzugsweise kann die Zuführung des wenigstens einen die Siebanordnung durchströmenden Luftstromes derart beschränkt werden, dass eine pulsierende Durchströmung wenigstens eines Siebes erreicht wird. Auf diese Weise ließe sich die Unterbrechung des Luftstromes auf die Rückhubbewegung beispielsweise nur des Obersiebes der Siebanordnung beschränken. Das Untersieb könnte hingegen während der Rückhubbewegung der Siebanordnung weiterhin mit einem kontinuierlichen Luftstrom beaufschlagt werden. Die Strömungsgeschwindigkeit dieses Luftstroms könnte dabei für die Dauer der Rückhubbewegung reduziert werden. Eine umgekehrte Konstellation ist ebenfalls denkbar.

Alternativ kann die Zuführung des wenigstens einen die Siebanordnung durchströmenden Luftstromes derart beschränkt werden, dass eine wechselweise Durchströmung des jeweils wenigstens einen in einer Ebene angeordneten Siebes erreicht wird.

Bevorzugt sollte die Unterbrechung der Luftströmung proportional zu der Hubbewegung der Siebanordnung angesteuert werden. Insbesondere beträgt das Verhältnis zwischen der Rückhubbewegung der Siebanordnung und der Unterbrechung des Luftstromes, das heißt die Taktung der Unterbrechung der Luftströmung, 1:1, 1:2 oder größer.

Vorzugsweise kann die Strömungsgeschwindigkeit der wenigstens einen Luftströmung während der vorwärts gerichteten Hubbewegung der Siebanordnung gegenüber der rückwärts gerichteten Hubbewegung erhöht werden. Der Reinigungseffekt kann dadurch verbessert werden, dass während des Vorwärtshubes der Siebanordnung eine gegenüber der rückwärts gerichteten Hubbewegung in Abhängigkeit vom Erntegut eingestellte Strömungsgeschwindigkeit des Luftstromes signifikant erhöhte Strömungsgeschwindigkeit eingestellt wird. Diese Maßnahme kann zu einer Verbesserung der Kornsauberkeit beitragen.

Des Weiteren wird die eingangs gestellte Aufgabe durch einen Mähdrescher mit einer Reinigungseinrichtung gemäß dem nebengeordneten Anspruch 7 gelöst. Gemäß dem Anspruch 7 wird ein Mähdrescher mit einer Reinigungseinrichtung vorgeschlagen, welche zumindest eine Druckluftquelle, zur Bereitstellung wenigstens eines Luftstromes, sowie eine oszillierend angetriebene Siebanordnung, welche zumindest zwei in verschiedenen Ebenen angeordnete Siebe aufweist, die eine vorwärts und eine rückwärts gerichtete Hubbewegung ausführen und die von ihrer Unterseite her von dem wenigstens einen Luftstrom durchströmt werden. Die Reinigungseinrichtung ist dadurch gekennzeichnet, dass zu der Ansteuerung der Reinigungseinrichtung eine Steuerungseinrichtung vorgesehen ist, welche dazu eingerichtet ist, Mittel anzusteuern, um den wenigstens einen die Siebanordnung durchströmenden Luftstrom während der rückwärts gerichteten Hubbewegung der Siebanordnung zu unterbrechen. Durch die Steuerungseinrichtung wird die Zufuhr des wenigstens einen Luftstromes unterbrochen, wenn die jeweilige Siebebene von der über die jeweilige Siebebene geförderten Gutschicht wegbewegt wird. Dies hat den Effekt, dass das schwerkraftbedingte Abscheiden gegen einen reduzierten Druck der die Siebanordnung durchströmenden Luftströmung erfolgt, sodass die freibeweglichen Körner in dem Gutgemisch einfacher/schneller die Siebebene zwecks Abscheidung erreichen.

Vorzugsweise kann die Steuerungseinrichtung dazu eingerichtet sein, Mittel in Abhängigkeit von der Hubbewegung der Siebanordnung ansteuern, die zur intermittierenden Unterbrechung des wenigstens einen Luftstromes eingerichtet sind. Hierzu können die Mittel mechanisch an die Siebanordnung gekoppelt sein. Auf diese Weise kann die Steuerungseinrichtung, die die Schwingungsfrequenz der Siebanordnung ansteuert, gleichzeitig die Mittel zur intermittierenden Unterbrechung des wenigstens einen Luftstromes ansteuern. Alternativ kann die Steuerungseinrichtung einen oder mehrere einzelmotorische Antriebe ansteuern, welche dem Antrieb der Mittel zur intermittierenden Unterbrechung des wenigstens einen Luftstromes dienen.

So können die Mittel als wenigstens ein Gebläse mit einem auf die Siebanordnung gerichteten Strömungskanal ausgeführt sein. Bei dem wenigstens einen Gebläse kann es sich um ein Axial- oder ein Radialgebläse handeln. Die Steuerungseinrichtung kann dazu eingerichtet sein, den oder die Antriebe des wenigstens einen Gebläses derart anzusteuern, dass sich ein Geschwindigkeitsprofil der Luftströmung einstellt, welches mit der Hubbewegung der Siebanordnung korreliert.

Bevorzugt kann das wenigstens eine Gebläse als ein Radialgebläse ausgeführt sein, dessen Schaufelanzahl an die Schwingungsfrequenz der Siebanordnung angepasst ist.

Gemäß einer bevorzugten Weiterbildung können die Mittel als eine in einen Siebrahmen der Siebanordnung integrierte Düsenanordnung ausgeführt sein.

Weiterhin können die Mittel als zwei um Achsen begrenzt schwenkbare Klappen am Ausgang eines auf die Siebanordnung gerichteten Strömungskanal ausgeführt sein. Hierbei können die Klappen mechanisch mit der Siebanordnung gekoppelt sein. Die mechanische Kopplung kann beispielsweise durch Koppelstangen realisiert werden. Die Koppelstangen können in Abhängigkeit von der Bewegung der Siebanordnung die Klappen derart betätigen, dass die Luftströmung während des Vorwärtshubes der Siebanordnung ungehindert die zumindest zwei Siebe der Siebabordnung durchströmt, während für die Dauer der Rückhubbewegung der Siebanordnung die Klappen den Strömungskanal verschließen. Alternativ können die Klappen derart durch die Koppelstangen betätigt werden, dass in Abhängigkeit von der Bewegung der Siebanordnung die Luftströmung wechselweise nur der einen oder nur der anderen Siebebene zugeführt wird.

In einer bevorzugten Weiterbildung können die Klappen einzelmotorisch betätigbar sein, so dass ein einseitiges oder wechselweises Freigeben und Sperren des Ausgangs des Strömungskanals ansteuerbar ist. Dazu könnten die einzelmotorischen Antriebe der Klappen in der Weise von der Steuerungseinrichtung angesteuert werden, dass der Luftstrom während des Rückwärtshubes der Siebanordnung nur eine der beiden Siebebenen durchströmt. Denkbar ist eine wechselweise Unterbrechung des den Siebebenen zugeführten Luftstromes, so dass während eines ersten Rückhubes der Siebanordnung nur das Obersieb und während eines zweiten Rückhubes nur das Untersieb durchströmt wird.

Eine vorteilhafte Weiterbildung gemäß dem Anspruch 13 sieht vor, dass die Mittel als zwei um Achsen rotierende Paddel am Ausgang eines auf die Siebanordnung gerichteten Strömungskanal ausgeführt sein können. Mittels der rotierenden Paddel lässt sich der aus dem Strömungskanal austretende Luftstrom unterbrechen, wobei die Dauer der Unterbrechung, das heißt die Drehzahl der Paddel, in Abhängigkeit von der Dauer der Rückhubbewegung der Siebanordnung gesteuert wird. Auch bei dieser Weiterbildung können die Paddel einzelmotorisch angetrieben und in Abhängigkeit von der Bewegungsrichtung der Siebanordnung angesteuert werden. Dabei können die einzelmotorischen Antriebe synchron angesteuert werden, so dass die Zuführung des wenigstens einen Luftstromes zu beiden Siebebenen unterbrochen wird. Ebenfalls denkbar ist es, einen Phasenversatz der Rotationsbewegung einzustellen, um wechselweise nur das Obersieb oder nur das Untersieb während des Rückhubes der Siebanordnung von dem wenigstens einen Luftstrom durchströmen zu lassen.

Eine weitere bevorzugte Weiterbildung sieht vor, dass die Mittel als zumindest ein um zwei Rollen umlaufendes Band mit darin intermittierend angeordneten Öffnungen ausgeführt sein kann, das am Ausgang eines auf die Siebanordnung gerichteten Strömungskanal angeordnet ist.

Des Weiteren kann im Strömungskanal des wenigstens einen Gebläses zumindest eine Membrane angeordnet sein, die der temporären Verengung oder dem temporären Verschließen des Strömungskanals dient. In einer Ausgestaltung mit nur einer Membrane kann diese in einer der vertikal verlaufenden Seitenwände des Strömungskanals des mindestens einen Gebläses angeordnet sein. Weiterhin können beispielsweise zwei Membranen einander gegenüberliegend in den vertikalen oder horizontalen Seitenwänden angeordnet sein. Des Weiteren können auch mehr als zwei Membranen in dem Strömungskanal angeordnet sein, um die Wege zu reduzieren, welche die Membranen zurücklegen müssen, um den Strömungskanal temporär zu verengen oder zu verschließen. Zur Betätigung der Membranen können diese mittels einer Koppelvorrichtung an die Siebbewegung gekoppelt sein, so dass die Membranen passiv angesteuert werden. Alternativ können die Membranen aktiv durch ein Aktorik betätigbar sein, die wiederum in Abhängigkeit von der Siebbewegung angesteuert wird.

Die vorliegende Erfindung wird nachstehend anhand von in den Zeichnungen dargestellten Ausführungsbeispielen näher erläutert.

Es zeigen:
- Fig. 1: eine schematisierte Längsschnittdarstellung eines Mähdreschers;
- Fig. 2: eine schematische Ansicht einer Reinigungseinrichtung des Mähdreschers;
- Fig. 3: eine schematische Teilansicht einer Reinigungseinrichtung gemäß einer zweiten Ausführungsform;
- Fig. 4: eine schematische Teilansicht einer Reinigungseinrichtung gemäß einer dritten Ausführungsform.

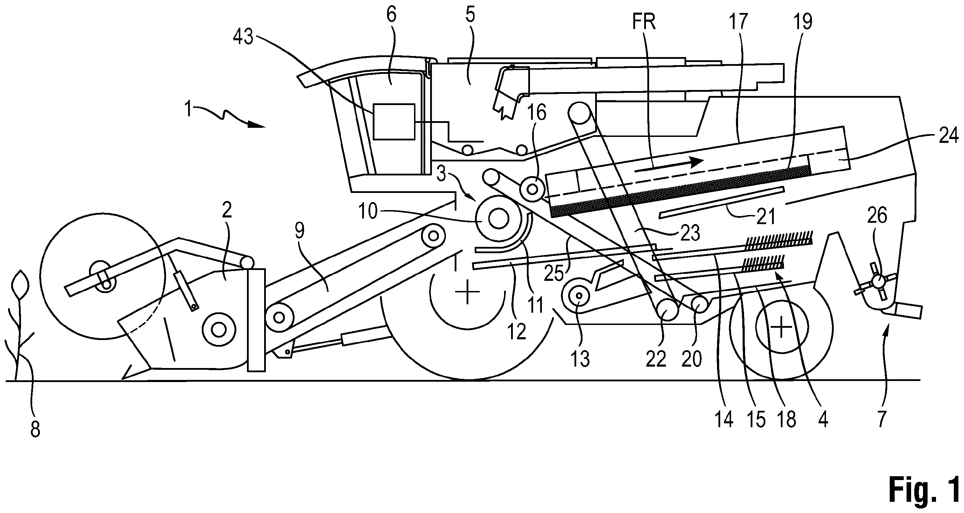

Die Darstellung in Fig. 1 zeigt eine schematische Längsschnittdarstellung eines Mähdrescher 1. Der Mähdrescher 1 trägt in seinem Frontbereich ein höhenverstellbares Schneidwerk 2, welches gewachsenes Erntegut 8 auf großer Breite aberntet, in seitlicher Richtung zusammenführt und an ein Schrägförderorgan 9 übergibt. Durch das Schrägförderorgan 9 gelangt das Erntegut 8 zu Dreschorganen 3, die in der Regel als Mehrtrommeldreschwerke ausgeführt sind. Die Dreschorgane 3 gemäß der Darstellung in der Fig. 1 umfassen eine Dreschtrommel 10, eine dieser nachgeordnete Wendetrommel 16 und einen die Dreschtrommel 10 abschnittsweise umgebenden Dreschkorb 11. Durch Öffnungen des Dreschkorbs 11 hindurch wird aus dem Erntegut 8 ein im Wesentlichen aus einem Gemisch aus Körnern, Kurzstroh und Spreu bestehender Erntegutstrom abgeschieden, der auf einen Vorbereitungsboden 12 fällt. Durch Rüttelbewegungen des oszillierend angetriebenen Vorbereitungsbodens 12 wird das Erntegut darauf nach hinten in Richtung einer Reinigungseinrichtung 4 gefördert.

Der nicht durch den Dreschkorb 11 hindurch getretene Teil des Erntegutstroms wird von der Wendetrommel 16 zu einer als Axialrotor 17 ausgeführten, sich in Längsrichtung des Mähdreschers 1 erstreckenden Abscheidevorrichtung weiterbefördert. Der Axialrotor 17 ist in seinem unteren Bereich von einem halbzylindrischen Sieb 19 umgeben, durch das ein im Wesentlichen aus einem Gemisch aus Körnern und Ährenbruchstücken bestehender Erntegutstrom abgeschieden wird, der auf einen unterhalb des Siebs 19 angeordneten Rücklaufboden 21 gelangt.

Anstelle eines einzelnen Axialrotors 17 könnten auch zwei Axialrotoren parallel nebeneinander vorgesehen sein. Alternativ kann als Abscheidevorrichtung eine Hordenschüttlervorrichtung anstelle des Axialrotors 17 zum Einsatz kommen.

Erntegut, im Wesentlichen Stroh, welches am rückwärtigen Ende 24 des Axialrotors 17 ausgeworfen wird, gelangt zu einer Verteilvorrichtung 7 am Heck des Mähdreschers 1, wo es von einem Häcksler 26 zerkleinert und schließlich auf den Boden eines Feldes ausgebracht wird.

Auf dem rüttelnd bewegten Rücklaufboden 21 wird das durch das Sieb 19 abgegebene Erntegut vorwärts in Richtung der Dreschorgane 3 gefördert und an die Reinigungseinrichtung 4 übergeben, wo sich der Erntegutstrom des Rücklaufbodens 21 mit dem durch den Dreschkorb 11 hindurch getretenen Erntegutstrom vereinigt, der von dem Vorbereitungsboden 12 an die Reinigungseinrichtung 4 abgegeben wird. Die Reinigungseinrichtung 4 umfasst ein Obersieb 14, ein Untersieb 15 und ein Reinigungsgebläse 13, welches einen durch und über die Siebe 14, 15 streichenden Luftstrom erzeugt. Das Reinigungsgebläse 13 umfasst ein Gehäuse 28 sowie zumindest ein auf wenigstens einer Antriebswelle angeordnetes Lüfterrad 30 (in Fig. 1 nicht dargestellt). Das in den vom Vorbereitungsboden 12 beziehungsweise vom Rücklaufboden 21 kommenden Erntegutströmen enthaltene Korn passiert nacheinander das Obersieb 14 sowie das Untersiebe 15 und erreicht über einen darunter liegenden Boden 18 eine Schneckenfördereinrichtung 22 und einen Kornelevator 23, der es in einen im Rücken der Fahrerkabine 6 angeordneten Korntank 5 fördert.

Anteile des Erntegutstroms, die leichter als das Korn sind, werden beim Herabfallen vom Vorbereitungsboden 12 auf das Obersieb 14, vom Obersieb 14 auf das Untersieb 15 oder vom Untersieb 15 auf den Boden 18 von dem Luftstrom des Reinigungsgebläses 13 erfasst und mitgerissen, erreichen den Verteiler 7 und werden über diesen ausgeschieden. Schwere, gröbere Anteile des Erntegutstromes, wie unausgedroschene Ährenspitzen, gelangen mittels einer Überkehr am rückwärtigen Ende der Siebe 14, 15 in einen unterhalb der Siebe 14, 15 quer verlaufenden Graben. Eine in dem Graben rotierende Schnecke 20 räumt das Material seitwärts zu einem Überkehrelevator 25, der es zurück zu den Dreschorganen 3 befördert. Eine Steuerungseinrichtung 43 dient der Ansteuerung der Arbeitsorgane des Mähdreschers 1.

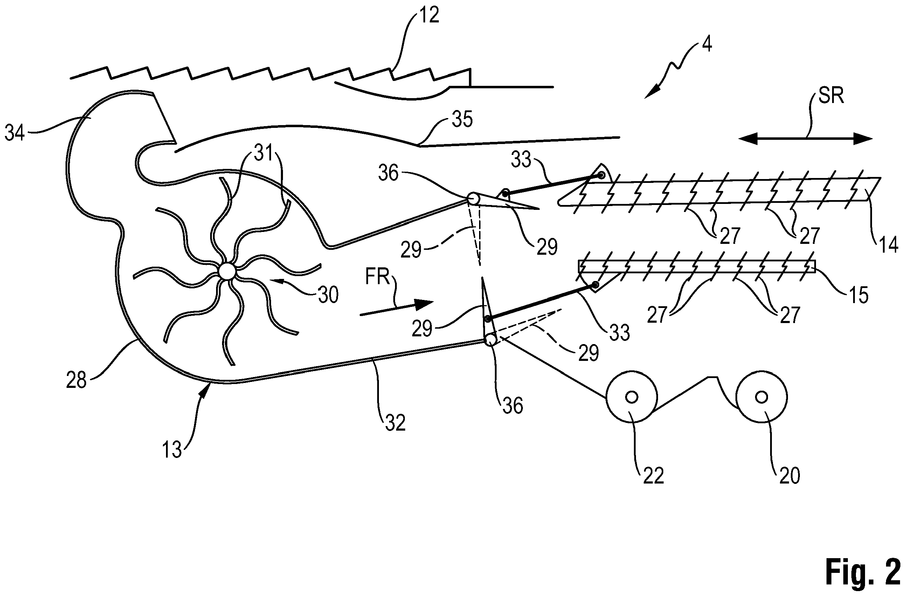

In Fig. 2 ist eine schematische Ansicht der Reinigungseinrichtung 4 des Mähdreschers 1 dargestellt. Die Darstellung zeigt ein als Radialgebläse ausgeführtes Reinigungsgebläse 13, in dessen Gehäuse 28 ein oder mehrere Lüfterräder 30 angeordnet sind. Die Lüfterräder 30 sind in Umfangsrichtung mit Schaufeln 31 versehen. An das abschnittsweise einen kreisförmigen Querschnitt aufweisende Gehäuse 28 schließen sich ein Kanalabschnitt 32 sowie in Umfangsrichtung zu diesem versetzt, ein Lauftaustritt 34 an. Der aus dem Kanalabschnitt 32 in Pfeilrichtung FR austretende Luftstrom wird der aus Obersieb 14 und Untersieb 15 bestehenden Siebanordnung zugeführt. Der Kanalabschnitt 32 weitet sich entlang seiner Längsachse auf, so dass der Luftstrom das Obersieb 14 und das Untersieb 15 sowohl überstreicht als auch von unten her durchströmt. Das Obersieb 14 und das Untersieb 15 sind in bekannter Weise als so genannte Lamellensiebe ausgeführt. Das Obersieb 14 und das Untersieb 15 weisen eine Vielzahl von Lamellen 27 auf, deren Neigung zur Siebebene verstellbar ist, so dass sich, in Abhängigkeit von der zu verarbeitenden Erntegutart, unterschiedliche Sieböffnungsweiten darstellen lassen. Diese Einstellung ist mittels der Steuerungseinrichtung 43 ansteuerbar. Pfeil SR beschreibt ein Bewegungsrichtung der oszillierend angetriebenen Siebanordnung, deren Obersieb 14 und Untersieb 15 eine vorwärts und eine rückwärts gerichtete Hubbewegung ausführen. Ein aus dem Luftaustritt 34 austretender Teilluftstrom wird mittels eines unterhalb des Vorbereitungsbodens 12 angeordneten Leitblechs 35 auf einen Bereich hinter dem Vorbereitungsboden 12 gelenkt, in welchem von dem Vorbereitungsboden 12 das zu reinigende Erntegut an das Obersieb 14 abgegeben wird.

Am Ausgang des Kanalabschnittes 32 sind zwei um Schwenkachsen 36 begrenzt schwenkbare Klappen 29 angeordnet. Die Klappen 29 erstrecken sich, in Abhängigkeit von ihrer Schwenkposition, ausgehend von der Oberkante beziehungsweise Unterkante des Kanalabschnittes 32 aufeinander zu oder in Richtung der Siebanordnung. Die wechselweise ansteuerbaren Schwenkpositionen sind strichliniert in der Darstellung der Fig. 2 veranschaulicht. Die Betätigung der Klappen 29 erfolgt im dargestellten Ausführungsbeispiel mittels einer mechanischen Kopplung zwischen der Siebanordnung und der jeweiligen Klappe 29. Eine Koppelstange 33 verbindet das Obersieb 14 mit der zu dieser benachbart angeordneten Klappe 29, während eine weitere Koppelstange 33 das Untersieb 15 mit der zu dieser benachbart angeordneten Klappe 29 verbindet. Die Ansteuerung der Klappen erfolgt somit mittelbar durch die Ansteuerung von Obersieb 14 und Untersieb 15 durch die Steuerungseinrichtung 43. Die Klappen 29 können auch einzelmotorisch angetrieben sein, beispielsweise durch jeweils einen einer Klappe 29 zugeordneten Elektromotor. Mittels der Steuerungseinrichtung des Mähdreschers 1 kann der Motor in Abhängigkeit von der Schwingungsfrequenz und der Bewegungsrichtung der Siebanordnung variabel angesteuert werden.

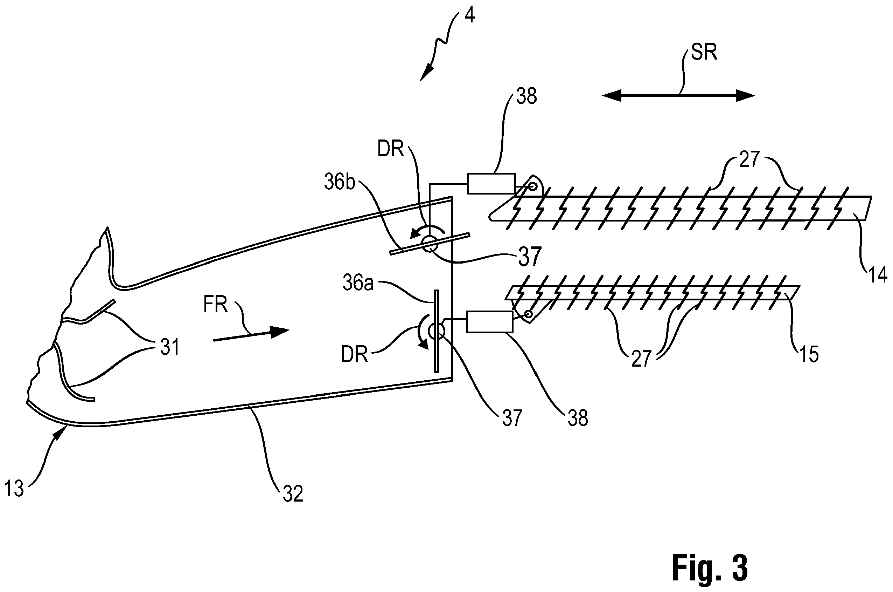

Die Darstellung in Fig. 3 zeigt eine schematische Teilansicht der Reinigungseinrichtung 4 gemäß einer zweiten Ausführungsform. Dargestellt ist nur ein Teil des Kanalabschnittes 32, der den aus diesem austretenden Luftstrom in Richtung des Obersiebes 14 und des Untersiebes 15 lenkt. Am Ausgang des Kanalabschnitts 32 ist jeweils ein um jeweils eine Rotationsachse 37 drehbares unteres Paddel 36a und oberes Paddel 36b angeordnet. Ein Pfeil DR beschreibt die Drehrichtung der beiden Paddel 36a und 36b. Die beiden Paddel 36a und 36b erstecken sich jeweils im Wesentlichen über die gesamte Breite des Kanalabschnittes 32. Das obere Paddel 36b ist dabei dem Obersiebe 14 und das untere Paddel 36a dem Untersieb 15 zugeordnet, um die Zuführung des Luftstromes zu beeinflussen. Wie in der Darstellung in Fig. 3 angedeutet, weist die Drehung des jeweiligen Paddels 36a, 36b einen Phasenversatz von etwa 90°auf. In der dargestellten Betriebssituation steht das untere, dem Untersieb 15 zugeordnete Paddel 36a senkrecht zur Strömungsrichtung im Luftstrom, wodurch die Durchströmung des Untersiebes 15 von der Unterseite her temporär unterbrochen wird. Das obere, dem Obersieb 14 zugeordnete Paddel 36a befindet sich in einer im Wesentlichen zur Strömungsrichtung parallelen Position, so dass der aus dem Kanalabschnitt 32 austretende Luftstrom nahezu ungehindert das Obersieb 14 von unten her durchströmen kann. Die Drehung der beiden Paddel 36a und 36b um ihre Rotationsachse 37 erfolgt in Abhängigkeit von der Bewegungsrichtung SR der Siebanordnung. Wie in Fig. 3 dargestellt ist, wird während der rückwärts gerichteten Hubbewegung der Siebanordnung der dem Untersieb 15 zugeführte Luftstrom temporär durch das unter Paddel 36a unterbrochen, während die Zufuhr des Luftstromes zu dem Obersieb 14 aufrechterhalten bleibt. Die jeweilige Rotationsachse 37 des jeweiligen Paddels 36a und 36b ist einzelmotorisch, insbesondere durch einen Elektromotor 38 oder beispielsweise einen Hydraulikmotor, antreibbar. Die Ansteuerung des Elektromotors 38 erfolgt in Abhängigkeit von der Ansteuerung des oder der Antriebe durch die Steuerungseinrichtung 43 welche die Siebanordnung oszillierend antreiben, um eine vorwärts und eine rückwärts gerichtete Hubbewegung des Obersiebes 14 und des Untersiebes 15 auszuführen. Der einzelmotorische Antrieb der Rotationsachsen 37 ermöglicht eine Drehung der beiden Paddel 36a, 36b mit einem variablen Phasenversatz, wobei dieser auch Null sein kann. Weiterhin lässt sich die Frequenz der Drehung variieren. Somit lassen sich während eines Rückhubes der Siebanordnung auch zwei- oder mehrfache Umdrehungen eines oder beider Paddel 36a, 36b einstellen. Darüber hinaus kann vorgesehen sein, dass der einzelmotorische Antrieb derart angesteuert wird, dass lediglich eine begrenzte Schwenkbewegung der Paddel 36a, 36 um die Rotationsachse 37 ausgeführt wird.

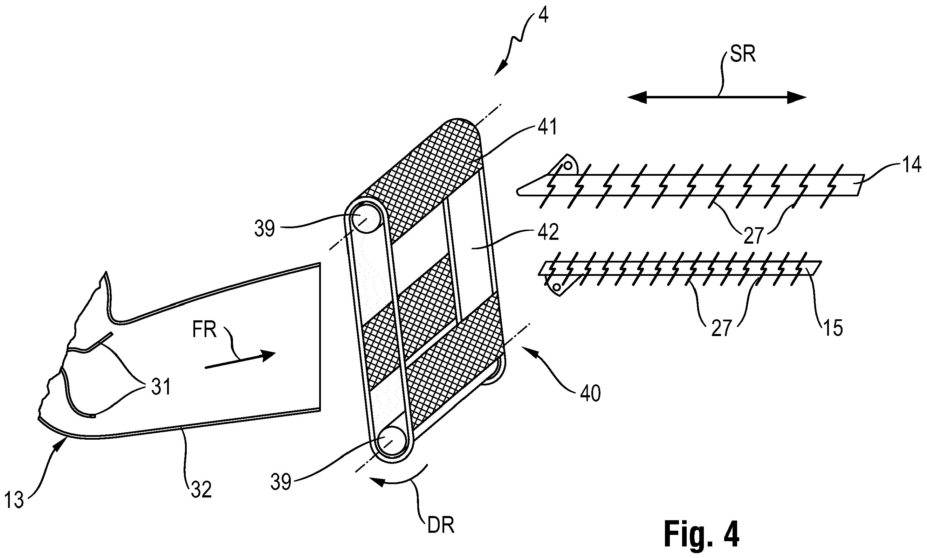

In Fig. 4 ist eine schematische Teilansicht der Reinigungseinrichtung 4 gemäß einer dritten Ausführungsform dargestellt. Diese dritte Ausführungsform unterscheidet sich von den vorstehend beschriebenen dadurch, dass am Ausgang des Kanalabschnittes 32 ein um zwei Rollen 39 endlos umlaufendes Band 40 angeordnet ist. Die Rollen 39 weisen eine Breite auf, die im Wesentlichen der Breite der Austrittsöffnung des Kanalabschnittes 32 entspricht. Zumindest eine der beiden Rollen 39 ist angetrieben. Das Band 40 ist in im Wesentlichen quaderförmige Öffnungen 42 und geschlossene Bandabschnitte 41 unterteilt. Die Anordnung der Öffnungen 42 zwischen den Bandabschnitten 41 ist intermittierend, das heißt es sind zumindest zwei Öffnungen 42 vorgesehen. Die Anzahl sowie die Erstreckung der Bandabschnitt 41 beziehungsweise der Öffnungen 41 in Drehrichtung DR des Bandes 40 kann mit der Schwingungsfrequenz der Siebanordnung variieren. Um eine für eine wechselweise Unterbrechung der Luftströmung während des Rückhubes von Obersieb 14 und Untersieb 15 zu sorgen, kann eine entsprechende Anordnung von Bandabschnitten 41 und Öffnungen 42 vorgesehen sein. Hierzu ist die Anzahl der Öffnungen derart gewählt, dass sich zwei Bandabschnitte 41 in einer zueinander parallel gegenüberliegenden Position befinden, wenn die Zufuhr des Luftstromes zu dem Obersieb 14 oder dem Untersieb 15 temporär unterbrochen ist. Dazu können hinsichtlich der Anzahl und Erstreckung der Öffnungen 42 unterschiedlich ausgestaltete Bänder 40 zum Einsatz kommen, die auswechselbar auf die Rollen 39 aufbringbar sind. Die zumindest eine angetriebene Rolle 39 wird vorzugsweise einzelmotorisch angetrieben. Die Steuerungseinrichtung 43 dient im dargestellten Ausführungsbeispiel der Ansteuerung wenigstens eines eine der Rollen 39 antreibenden Motors in der Weise, dass das Band 40 im Schwingungstakt umläuft. Dabei wird entsprechend der Bewegungsrichtung der Siebanordnung der von dem Reinigungsgebläse 13 zugeführte Luftstrom durch die Bandabschnitte 41 temporär unterbrochen oder kann ungehindert durch die Öffnungen 42 hindurchtreten.

Mittels der Steuerungseinrichtung 43 lässt sich für alle beschriebenen Ausführungsformen das Verhältnis zwischen der Rückhubbewegung der Siebanordnung und der Unterbrechung des Luftstromes flexibel einstellen. So beträgt das Verhältnis zwischen der Rückhubbewegung der Siebanordnung und der Unterbrechung des Luftstromes, das heißt die Taktung der Unterbrechung der Luftströmung, 1:1, 1:2 oder größer. Die mittels der Steuerungseinrichtung einstellbare Taktung orientiert sich an den Ernteguteigenschaften sowie den Ernte- und Betriebsbedingungen des Mähdreschers 1.

**Bezugszeichenliste**

| | | | |
|---|---|---|---|
| 1 | Mähdrescher | 31 | Schaufel |
| 2 | Schneidwerk | 32 | Kanalabschnitt |
| 3 | Dreschorgane | 33 | Koppelstange |
| 4 | Reinigungseinrichtung | 34 | Luftaustritt |
| 5 | Korntank | 35 | Leitblech |
| 6 | Fahrerkabine | 36 | Schwenkachse |
| 7 | Verteilvorrichtung | 37 | Rotationsachse |
| 8 | Erntegut | 38 | Elektromotor |
| 9 | Schrägförderorgan | 39 | Rolle |
| 10 | Dreschtrommel | 40 | Band |
| 11 | Dreschkorb | 41 | Bandabschnitt |
| 12 | Vorbereitungsboden | 42 | Öffnung |
| 13 | Reinigungsgebläse | 43 | Steuerungseinrichtung |
| 14 | Obersieb | | |
| 15 | Untersieb | DR | Drehrichtung |
| 16 | Wendetrommel | FR | Förderrichtung |
| 17 | Axialrotor | SR | Schwingungsrichtung |
| 18 | Boden | | |
| 19 | Sieb | | |
| 20 | Schnecke | | |
| 21 | Rücklaufboden | | |
| 22 | Schneckenfördereinrichtung | | |
| 23 | Kornelevator | | |
| 24 | Rückwärtiges Ende von 17 | | |
| 25 | Überkehrelevator | | |
| 26 | Häcksler | | |
| 27 | Lamelle | | |
| 28 | Gehäuse | | |
| 29 | Klappe | | |
| 30 | Lüfterrad | | |

## Patentansprüche

1. Verfahren zum Betreiben einer Reinigungseinrichtung (4) für einen Mähdrescher (1), umfassend zumindest eine Druckluftquelle (13), durch welche wenigstens ein Luftstrom bereitgestellt wird, sowie eine oszillierend angetriebene Siebanordnung, welche zumindest zwei in verschiedenen Ebenen angeordnete Siebe (14, 15) aufweist, die eine vorwärts und eine rückwärts gerichtete Hubbewegung (SR) ausführen und die von ihrer Unterseite her von dem wenigstens einen Luftstrom durchströmt werden, **dadurch gekennzeichnet, dass** wenigstens ein die Siebanordnung durchströmender Luftstrom während der rückwärts gerichteten Hubbewegung (SR) der Siebanordnung unterbrochen wird.

2. Verfahren nach Anspruch 1, **dadurch gekennzeichnet, dass** die Zuführung des wenigstens eines Luftstromes für die Dauer der rückwärts gerichteten Hubbewegung (SR) der Siebanordnung unterbrochen wird.

3. Verfahren nach einem der Ansprüche 1 oder 2, **dadurch gekennzeichnet, dass** die Zuführung des wenigstens einen die Siebanordnung durchströmenden Luftstromes derart beschränkt wird, dass eine pulsierende Durchströmung wenigstens eines Siebes erreicht wird.

4. Verfahren nach einem der Ansprüche 1 oder 2, **dadurch gekennzeichnet, dass** die Zuführung des wenigstens einen die Siebanordnung durchströmenden Luftstromes derart beschränkt wird, dass eine wechselweise Durchströmung des jeweils wenigstens einen in einer Ebene angeordneten Siebes (14, 15) erreicht wird.

5. Verfahren nach einem der Ansprüche 1 bis 4, **dadurch gekennzeichnet, dass** die Unterbrechung der Luftströmung proportional zu der Hubbewegung (SR) angesteuert wird.

6. Verfahren nach einem der Ansprüche 1 bis 5, **dadurch gekennzeichnet, dass** die Strömungsgeschwindigkeit der wenigstens einen Luftströmung während der vorwärts gerichteten Hubbewegung (SR) der Siebanordnung gegenüber der rückwärts gerichteten Hubbewegung (SR) erhöht wird.

7. Mähdrescher (1) mit einer Reinigungseinrichtung (4), umfassend zumindest eine Druckluftquelle (13), zur Bereitstellung wenigstens eines Luftstromes, sowie eine oszillierend angetriebene Siebanordnung, welche zumindest zwei in verschiedenen Ebenen angeordnete Siebe (14, 15) aufweist, die eine vorwärts und eine rückwärts gerichtete Hubbewegung (SR) ausführen und die von ihrer Unterseite her von dem wenigstens einen Luftstrom durchströmt werden, **dadurch gekennzeichnet, dass** zu der Ansteuerung der Reinigungseinrichtung (4) eine Steuerungseinrichtung (43) vorgesehen ist, welche dazu eingerichtet ist, Mittel (29, 36a, 36b, 40) anzusteuern, um wenigstens einen die Siebanordnung durchströmenden Luftstrom während der rückwärts gerichteten Hubbewegung (SR) der Siebanordnung zu unterbrechen.

8. Mähdrescher (1) nach Anspruch 7, **dadurch gekennzeichnet, dass** die Steuerungseinrichtung (43) dazu eingerichtet ist, Mittel in Abhängigkeit von der Hubbewegung (SR) der Siebanordnung ansteuern, die zur intermittierenden Unterbrechung des wenigstens einen Luftstromes eingerichtet sind.

9. Mähdrescher (1) nach Anspruch 8, **dadurch gekennzeichnet, dass** die Mittel als wenigstens ein Gebläse mit einem auf die Siebanordnung gerichteten Kanalabschnitt (32) ausgeführt sind.

10. Mähdrescher (1) nach Anspruch 9, **dadurch gekennzeichnet, dass** das wenigstens eine Gebläse (13) als Radialgebläse ausgeführt ist, dessen Schaufelanzahl an die Schwingungsfrequenz der Siebanordnung angepasst ist.

11. Mähdrescher (1) nach Anspruch 8, **dadurch gekennzeichnet, dass** die Mittel als eine in einen Siebrahmen der Siebanordnung integrierte Düsenanordnung ausgeführt sind.

12. Mähdrescher (1) nach einem der Ansprüche 7 oder 8, **dadurch gekennzeichnet, dass** die Mittel als zwei um Achsen (36) begrenzt schwenkbare Klappen (29) am Ausgang eines auf die Siebanordnung gerichteten Kanalabschnittes (32) ausgeführt sind.

13. Mähdrescher (1) nach einem der Ansprüche 7 oder 8, **dadurch gekennzeichnet, dass** die Mittel als zwei um Achsen (37) rotierende Paddel (36a, 36b) am Ausgang eines auf die Siebanordnung gerichteten Kanalabschnittes (32) ausgeführt sind.

14. Mähdrescher (1) nach einem der Ansprüche 7 oder 8, **dadurch gekennzeichnet, dass** die Mittel als zumindest ein um zwei Rollen (39) umlaufendes Band (40) mit darin intermittierend angeordneten Öffnungen (42) ausgeführt sind, das am Ausgang eines auf die Siebanordnung gerichteten Kanalabschnittes (32) angeordnet ist.

15. Mähdrescher (1) nach einem der Ansprüche 7 oder 8, **dadurch gekennzeichnet, dass** das Mittel als zumindest eine im Strömungskanal des wenigstens einen Reinigungsgebläses (13) angeordnete Membrane ausgeführt ist, die der temporären Verengung oder dem temporären Verschließen des Strömungskanals dient.

## Claims

1. A method for operating a cleaning device (4) for a combine harvester (1), comprising at least one compressed air source (13) by means of which at least one air flow is provided, as well as a sieve assembly which is driven in oscillation, which comprises at least two sieves (14, 15) which are disposed in different planes and which execute a forwardly and a backwardly orientated lifting movement (SR) and through which the at least one air flow passes from the underside, **characterized in that** at least one air flow passing through the sieve assembly is interrupted during the backwardly orientated lifting movement (SR) of the sieve assembly.

2. The method according to claim 1, **characterized in that** the supply of the at least one air flow is interrupted for the duration of the backwardly orientated lifting movement (SR) of the sieve assembly.

3. The method according to claim 1 or claim 2, **characterized in that** the supply of the at least one air flow passing through the sieve assembly is restricted in a manner such that a pulsating flow which passes through at least one sieve is obtained.

4. The method according to claim 1 or claim 2, **characterized in that** the supply of the at least one air flow passing through the sieve assembly is restricted in a manner such that an alternating flow which passes through the respective at least one sieve (14, 15) disposed in one plane is obtained.

5. The method according to one of claims 1 to 4, **characterized in that** the interruption of the air flow is controlled so as to be proportional to the lifting movement (SR).

6. The method according to one of claims 1 to 5, **characterized in that** the flow speed of the at least one air flow during the forwardly orientated lifting movement (SR) of the sieve assembly is higher compared with the backwardly orientated lifting movement (SR).

7. A combine harvester (1) having a cleaning device (4), comprising at least one compressed air source (13) for providing at least one air flow, as well as a sieve assembly which is driven in oscillation, which comprises at least two sieves (14, 15) which are disposed in different planes and which execute a forwardly and a backwardly orientated lifting movement (SR) and through which the at least one air flow passes from the underside, **characterized in that** in order to control the cleaning device (4), a control device (43) is provided which is configured to control means (29, 36a, 36b, 40) for interrupting at least one air flow passing through the sieve assembly during the backwardly orientated lifting movement (SR) of the sieve assembly.

8. The combine harvester (1) according to claim 7, **characterized in that** the control device (43) is configured to control means which are configured to intermittently interrupt the at least one air flow as a function of the lifting movement (SR) of the sieve assembly.

9. The combine harvester (1) according to claim 8, **characterized in that** the means are configured as at least one blower with a channel section (32) directed onto the sieve assembly.

10. The combine harvester (1) according to claim 9, **characterized in that** the at least one blower (13) is configured as a centrifugal blower with vanes the number of which is matched to the frequency of oscillation of the sieve assembly.

11. The combine harvester (1) according to claim 8, **characterized in that** the means are configured as an assembly of nozzles which is integrated into a sieve frame of the sieve assembly.

12. The combine harvester (1) according to claim 7 or claim 8, **characterized in that** the means are configured as two shutters (29) which can pivot in a limited manner about axes (36) positioned at the outlet from a channel section (32) directed onto the sieve assembly.

13. The combine harvester (1) according to claim 7 or claim 8, **characterized in that** the means are configured as two paddles (36a, 36b) which can rotate about axes (37) positioned at the outlet from a channel section (32) directed onto the sieve assembly.

14. The combine harvester (1) according to claim 7 or claim 8, **characterized in that** the means are configured as at least one belt (40) which can run around two rollers (39) with openings (42) disposed intermittently therein and which is positioned at the outlet from a channel section (32) directed onto the sieve assembly.

15. The combine harvester (1) according to claim 7 or claim 8, **characterized in that** the means are configured as at least one membrane disposed in the flow channel of the at least one cleaning blower (13), which acts to temporarily constrict or to temporarily close off the flow channel.

## Revendications

1. Procédé pour opérer un équipement de nettoyage (4) pour une moissonneuse-batteuse (1), comprenant au moins une source d'air comprimé (13), par l'intermédiaire de laquelle est fourni au moins un courant d'air, ainsi qu'un agencement de tamisage à entraînement oscillant qui comporte au moins deux grilles (14, 15), lesquelles sont disposées sur des plans différents, effectuent des courses (SR) dirigées vers l'avant et vers l'arrière et sont traversées par le au moins un courant d'air à partir de leur sous-face, **caractérisé en ce qu'**au moins un courant d'air traversant l'agencement de tamisage est interrompu pendant la course (SR) dirigée vers l'arrière.

2. Procédé selon la revendication 1, **caractérisé en ce que** l'arrivée du au moins un courant d'air est interrompue pendant la durée de la course (SR) de l'agencement de tamisage dirigée vers l'arrière.

3. Procédé selon une des revendications 1 ou 2, **caractérisé en ce que** l'arrivée du au moins un courant d'air traversant l'agencement de tamisage est limitée de façon qu'une traversée pulsative d'au moins une grille soit atteinte.

4. Procédé selon une des revendications 1 ou 2, **caractérisé en ce que** l'arrivée du au moins un courant d'air traversant l'agencement de tamisage est limitée de façon qu'une traversée alternée de la au moins une grille respective (14, 15) disposée dans un plan soit atteinte.

5. Procédé selon une des revendications 1 à 4, **caractérisé en ce que** l'interruption du courant d'air est commandée proportionnellement à la course (SR).

6. Procédé selon une des revendications 1 à 5, **caractérisé en ce que** la vitesse d'écoulement du au moins un courant d'air est accrue pendant la course (SR) de l'agencement de tamisage dirigée vers l'avant par rapport à la course (SR) dirigée vers l'arrière.

7. Moissonneuse-batteuse (1) comprenant un équipement de nettoyage (4), incluant au moins une source d'air comprimé (13) pour fournir au moins un courant d'air, ainsi qu'un agencement de tamisage à entraînement oscillant qui comporte au moins deux grilles (14, 15), lesquelles sont disposées sur des plans différents, effectuent des courses (SR) dirigées vers l'avant et vers l'arrière et sont traversées par le au moins un courant d'air à partir de leur sous-face, **caractérisée en ce que** pour commander l'équipement de nettoyage (4) est prévu un équipement de commande (43) qui est agencé pour commander des moyens (29, 36a, 36b, 40) afin d'interrompre au moins un courant d'air traversant l'agencement de tamisage pendant la course (SR) dirigée vers l'arrière de l'agencement de tamisage.

8. Moissonneuse-batteuse (1) selon la revendication 7, **caractérisée en ce que** l'équipement de commande (43) est agencé pour commander des moyens en fonction de la course (SR) de l'agencement de tamisage, lesquels sont agencés pour interrompre par intermittence le au moins un courant d'air.

9. Moissonneuse-batteuse (1) selon la revendication 8, **caractérisée en ce que** les moyens sont conformés sous la forme d'au moins un ventilateur avec une portion de canal (32) dirigée vers l'agencement de tamisage.

10. Moissonneuse-batteuse (1) selon la revendication 9, **caractérisée en ce que** le au moins un ventilateur (13) est conformé sous la forme d'un ventilateur radial dont le nombre de pales est adapté à la fréquence d'oscillation de l'agencement de tamisage.

11. Moissonneuse-batteuse (1) selon la revendication 8, **caractérisée en ce que** les moyens sont conformés sous la forme d'un agencement de buses intégré dans un cadre de grille de l'agencement de tamisage.

12. Moissonneuse-batteuse (1) selon une des revendications 7 ou 8, **caractérisée en ce que** les moyens sont conformés sous la forme de deux clapets à pivotement limité (29) autour d'axes (36), à la sortie d'une portion de canal (32) dirigée vers l'agencement de tamisage.

13. Moissonneuse-batteuse (1) selon une des revendications 7 ou 8, **caractérisée en ce que** les moyens sont conformés sous la forme de deux palettes (36a, 36b) tournant autour d'axes (37), à la sortie d'une portion de canal (32) dirigée vers l'agencement de tamisage.

14. Moissonneuse-batteuse (1) selon une des revendications 7 ou 8, **caractérisée en ce que** les moyens sont conformés sous la forme d'au moins une bande (40) qui tourne autour de deux poulies (39) et est pourvue d'ouvertures (42) disposées par intermittence et qui est disposée à la sortie d'une portion de canal (32) dirigée vers l'agencement de tamisage.

15. Moissonneuse-batteuse (1) selon une des revendications 7 ou 8, **caractérisée en ce que** le moyen est conformé sous la forme d'au moins une membrane qui est disposée dans le canal d'écoulement du au moins un ventilateur de nettoyage (13) et qui sert à rétrécir temporairement ou à fermer temporairement le canal d'écoulement.
